# EUROPÄISCHE PATENTSCHRIFT

(11) **EP 4 116 601 B1**
(45) Veröffentlichungstag und Bekanntmachung des Hinweises auf die Patenterteilung: **11.09.2024**
(21) Anmeldenummer: 22177995.2
(22) Anmeldetag: 09.06.2022
(51) Int. Cl.: F16G 1/28, F16G 1/10, F16G 1/12

(54) **RIEMEN MIT ELEKTRISCH LEITFÄHIGEM POLYMEREM MATERIAL**
BELT WITH ELECTRICALLY CONDUCTIVE POLYMERIC MATERIAL
COURROIE POURVUE DE MATIÈRE POLYMÈRE ÉLECTRO-CONDUCTRICE

(30) Priorität: 05.07.2021 DE 102021207024
(43) Veröffentlichungstag der Anmeldung: 11.01.2023
(73) Patentinhaber: ContiTech Deutschland GmbH, 30175 Hannover (DE)
(72) Erfinder: Quass, Jan-Henning, 30165 Hannover (DE); Göser, Hubert, 30165 Hannover (DE); Brocke, Stephan, 30165 Hannover (DE); Kucharczyk, Andre, 30165 Hannover (DE)
(74) Vertreter: Continental Corporation

(56) Entgegenhaltungen:
- EP-A1- 3 670 960
- EP-A2- 2 604 886
- WO-A1-00/58191
- WO-A1-2012/156223
- WO-A2-2008/089118
- GB-A- 837 984

## Beschreibung

Die Erfindung betrifft einen Riemen mit einem Riemenkörper, wobei der Riemenkörper ein elektrisch leitfähiges Polyurethan aufweist, vorzugsweise aus Polyurethan besteht. In dem Riemenkörper sind in einer Längsrichtung eine Mehrzahl von Zugträgern angeordnet und von dem polymeren Material des Riemenkörpers umschlossen, wobei der Riemen auf einer Antriebsseite eine Beschichtung aufweist, die einen festen Haftverbund mit dem Riemenkörper bildet. Die Beschichtung weist eine Folienschicht und eine zwischen dem Riemenkörper und der Folienschicht angeordnete Gewebeschicht auf.

### Stand der Technik

In der Antriebstechnik werden auf verschiedenen technischen Gebieten Riemen zur Kraftübertragung verwendet. Bei der Kraftübertragung z.B. in einem Verbrennungsmotor kann ein Riemen als flexibles, endlos geschlossenes Band ausgebildet sein. Riemen können jedoch auch mit zwei offenen Enden beispielsweise bei Aufzugssystemen eingesetzt werden, um eine Aufzugskabine in der Höhe zu bewegen.

Derartige Riemen werden heutzutage üblicherweise aus einem flexiblen Material wie z.B. aus einem elastomeren Material oder aus einem thermoplastischen Material wie z.B. aus Polyurethan (kurz: PU) als Riemenkörper hergestellt, in welches in der Richtung der Kraftübertragung, d.h. in der Bewegungsrichtung, Zugträger wie z.B. Stahlseile oder textile Zugträger eingebettet sind. Der Riemen weist wenigstens eine profilierte Seite auf, welche bei der Anwendung mit wenigstens einer Antriebsscheibe oder Antriebsrolle und mit wenigstens einer Umlenkscheibe oder Umlenkrolle bzw. einer Abtriebsscheibe oder Abtriebsrolle in Kontakt steht. Hierdurch kann der Riemen angetrieben und gleichzeitig geführt werden. Die Profilierung kann je nach Anwendungsfall quer zur Bewegungsrichtung z.B. als Zähne oder in der Bewegungsrichtung z.B. als Keile bzw. als Keilrippen ausgebildet sein.

Um das Material des Riemenkörpers vor Abrieb und dergleichen zu schützen, ist es bekannt, wenigstens die profilierte Seite des Riemens mit einer Beschichtung zu versehen. Hierdurch kann z.B. ein Gewebe verwendet werden, welches mit einer seiner Seiten flächig auf der korrespondierenden Seite des Riemenkörpers aufgebracht wird.

Die Herstellung eines derartigen Riemens erfolgt üblicherweise derart, dass die Beschichtung als Laminat separat hergestellt und anschließend mit dem Riemenkörper verbunden wird. Das Gewebe wird in diesem Fall mit einer Folie zu einem Laminat doubliert. Anschließend wird das Laminat so vorgeformt, dass das Laminat die Kontur der Profilierung des Riemens annimmt. Die Folie wird dabei plastifiziert, verformt und durch Abkühlen wieder verfestigt. Hierdurch nimmt auch das Gewebe die vorgegebene Form der Profilierung an. Anschließend wird das vorgeformte Laminat in der Herstellung des Riemens so eingesetzt, dass die Folie die Außenseite der Profilierung des Riemens bildet.

Insbesondere bei Anwendungen von Riemen in Umgebungen mit hoher Explosionsgefahr ist es erforderlich, dass elektrostatische Aufladungen über den Riemen abgeleitet werden können. Es muss also eine elektrisch leitende Verbindung zwischen dem Riemen und mindestens einer geerdeten Riemenscheibe oder Rückenrolle vorhanden sein. Alternativ kann eine elektrostatische Aufladung auch über mit dem Riemen in Kontakt stehenden Schleifbürsten abgeleitet werden.

Aus dem Stand der Technik sind verschiedene Ausführungsformen leitfähiger und somit antistatischer Riemen bekannt, zum Beispiel EP3670960A1 und WO00/58191A1.

Die US 2010/0197435 A1 offenbart einen Antriebsriemen mit einem Riemenkörper aus elastomerem Material und einer antistatischen und verschleißbeständigen Gewebebeschichtung. Die antistatischen Eigenschaften der Gewebebeschichtung werden durch elektrisch leitfähige Fasern erreicht. Die Beschichtung kann sowohl auf der Antriebsseite als auch auf der gegenüberliegenden Rückenseite des Riemens angeordnet sein. Ergänzend zu der leitfähigen Gewebebeschichtung kann auch das elastomere Material des Riemens elektrisch leitfähig ausgebildet sein. Nachteiligerweise eignet sich diese Ausführungsform eines antistatischen Gewebes nur für Riemen, die im Durchdrückverfahren hergestellt werden und nicht für die Anwendung bei im Gießverfahren hergestellten Riemen, da hierfür ein Vorformen des Gewebes mit einer zusätzlichen Folienpräparation erforderlich ist.

Die US 6,770,004 B1 offenbart ebenfalls einen elektrisch leitfähigen Antriebsriemen mit einer elektrisch leitfähigen Beschichtung aus thermoplastischem Polyethylen und einer benachbarten Gewebeschicht. Derartige leitfähige Folienbeschichtungen haben zum Nachteil, dass die Folien eine nur äußerst geringe elektrische Leitfähigkeit aufweisen und sich die mechanischen Eigenschaften der Folie durch die erforderlichen und die elektrische Leitfähigkeit verursachenden Additive verschlechtern. Zudem verliert der Riemen seine Leitfähigkeit, sobald die dünne Folienschicht verschlissen ist, was anwendungsabhängig sehr früh der Fall sein kann.

US 2015/0285334 A1 offenbart einen Riemen mit einem elektrisch leitfähigen Zugstrang, einer Außenschicht aus elektrisch leitfähigem thermoplastischem Material und einem elektrisch leitfähigen Gewebe, welches zwischen der Außenschicht und dem Zugstrang angeordnet ist. Es wird somit eine Leitfähigkeit des Riemens zwischen der Riemenoberfläche und dem Zugstrang über das dazwischen liegende leitfähige Gewebe realisiert. Das Gewebe kann für eine bessere mechanische Anbindung zumindest teilweise durch das elastomere Material, welches außerdem elektrisch leitfähig sein kann, gefüllt sein. Auch bei dieser Anmeldung erweist es sich als nachteilig, dass die Folie der Außenschicht eine nur äußerst geringe elektrische Leitfähigkeit aufweist und sich die mechanischen Eigenschaften der Folie durch die erforderlichen und die elektrische Leitfähigkeit verursachenden Additive verschlechtern.

### Aufgabe

Der Erfindung liegt die Aufgabe zugrunde, einen elektrisch leitfähigen Riemen mit einem Grundkörper aus Polyurethan mit verbesserten antistatischen Eigenschaften zur Übertragung hoher Leistungen bereitzustellen, wobei insbesondere die mechanischen Eigenschaften der Folienbeschichtung nicht nachteilig beeinflusst werden.

### Lösung der Aufgabe

Die Lösung dieser Aufgabe ergibt sich durch einen Riemen mit den Merkmalen des Hauptanspruchs. Erfindungsgemäß weist die Folienschicht zumindest eine stellenweise Perforation auf, wobei die Perforation zumindest teilweise von dem Polyurethan gefüllt ist.

Weitere vorteilhafte Ausbildungen sind in den abhängigen Ansprüchen offenbart.

### Vorteile der Erfindung

Der in dem Anspruch 1 offenbarte erfindungsgemäße Riemen umfasset einen Riemenkörper, wobei der Riemenkörper ein elektrisch leitfähiges Polyurethan aufweist, vorzugsweise aus Polyurethan besteht. In dem Riemenkörper ist in einer Längsrichtung eine Mehrzahl von Zugträgern angeordnet und von dem polymeren Material des Riemenkörpers umschlossen, wobei der Riemen auf einer Antriebsseite eine Beschichtung aufweist, die einen festen Haftverbund mit dem Riemenkörper bildet. Die Beschichtung weist eine Folienschicht und eine zwischen dem Riemenkörper und der Folienschicht angeordnete Gewebeschicht auf. Erfindungsgemäß weist die Folienschicht zumindest eine stellenweise Perforation auf, wobei die Perforation zumindest teilweise von dem Polyurethan gefüllt ist.

Mit anderen Worten gesagt betrifft die Erfindung einen elektrisch leitfähigen Antriebsriemen, bei dem die elektrische Leitfähigkeit über ein elektrisch leitfähiges Polyurethan realisiert werden kann. Das Polyurethan kann insbesondere als ein mehrkomponentiges, gießfähiges Reaktionsgemisch ausgebildet sein.

Insbesondere bei Anwendungen von Riemen in explosionsgeschützter Umgebung ist eine antistatische Eigenschaft des Riemens von besonders großer Bedeutung. Durch Relativbewegungen zwischen dem Riemen und den durch den Riemen umschlungenen Riemenscheiben kann sich der Riemen elektrostatisch aufladen. Diese elektrostatische Aufladung kann über einen elektrisch leitfähigen Riemen und über mindestens eine im Wesentlichen metallische und ebenfalls leitfähige und mit der Antriebsseite des Riemens im Eingriff stehenden, geerdeten Riemenscheibe abgeleitet werden. Die Erdung der Riemenscheibe kann je nach Anwendung zum Beispiel über das Gestell einer Werkzeugmaschine oder die Karosserie eines Fahrzeugs erfolgen. Die Ableitung elektrostatischer Aufladung kann ebenfalls über eventuell vorhandene Rückenrollen erfolgen.

Zum Schutz des Riemens vor Verschleiß, sowie zur Optimierung der Reibeigenschaften und der Akustik, kann der Riemen mit einer Beschichtung versehen sein. Diese Beschichtung kann als ein Gewebe- und Folienverbund ausgeführt sein, wobei das Gewebe zwischen der Folie und dem Riemenkörper angeordnet ist. Erfindungsgemäß weist die Folienschicht zumindest eine stellenweise Perforation auf, wobei die Perforation zumindest teilweise von dem elektrisch leitfähigen Polyurethan gefüllt ist. Als Perforation sind Durchgangsöffnungen der Folienschicht zu verstehen, welche mit dem elektrisch leitfähigen Polyurethan gefüllt sein können. Die Perforation kann sich hierbei über die gesamte Folienbreite erstrecken, wobei vorzugsweise 20% bis 60% der Folienoberfläche die Perforation aufweisen.

Mit anderen Worten gesagt kann das elektrisch leitfähige Polyurethan die Lücken des Gewebes und die Perforation der Folienschicht bis zur Oberfläche des Riemens durchdringen. Für optimale antistatische Eigenschaften zeigt es sich als besonders vorteilhaft, dass 80 % der Lücken des Gewebes mit dem Polyurethan gefüllt sind. Hierdurch kann auf besonders vorteilhafte Weise eine elektrische Leitfähigkeit des Riemens über den gesamten Querschnitt realisiert werden. Die elektrische Leitfähigkeit kann über nur eine Riemenkomponente erfolgen, wodurch Übergangswiderstände zwischen verschiedenen leitfähigen Komponenten vermieden werden können. So kann der elektrische Widerstand verringert und die Ableitung von elektrostatischen Ladungen über den Riemen verbessert werden. Riemen aus Polyurethan zeichnen sich durch eine besonders hohe Leistungsfähigkeit aus und können im Vergleich zu Riemen aus Gummiwerkstoffen besonders verschleißbeständig sein.

Eine weitere vorteilhafte Ausbildung des erfindungsgemäßen Riemens sieht vor, dass die Gewebeschicht elektrisch isolierend ausgebildet ist. Es ergibt sich auf vorteilhafte Weise, dass zur Erlangung antistatischer Eigenschaften des Riemens keine aufwendige Gewebepräparation erforderlich ist. So können im Vergleich zu Riemen mit einem leitfähigen Gewebe die Kosten in der Herstellung gesenkt werden.

Gemäß Anspruch 1 ist die Folienschicht elektrisch isolierend ausgebildet. Mit anderen Worten gesagt enthält die Folienschicht keine zusätzlichen Additive zur Erlangung einer elektrischen Leitfähigkeit, die die mechanischen Eigenschaften und die Dauerhaltbarkeit der Folie nachteilig beeinflussen würden. Daher kann eine elektrisch isolierende Folienschicht besonders belastbar, langlebig und verschleißbeständig sein.

Gemäß einem weiteren Aspekt der vorliegenden Erfindung weist die Folienschicht Polyethylen auf, vorzugsweise besteht die Folienschicht aus Polyethylen. Hierdurch können die mechanisch vorteilhaften Eigenschaften des Polyethylens für einen erfindungsgemäßen Riemen verwendet werden.

Gemäß einem weiteren Aspekt der vorliegenden Erfindung weist das Polyurethan Ruß mit einem Anteil von 1 bis 6 Gewichtsprozent auf. So kann eine gute elektrische Leitfähigkeit des Polyurethans erzielt werden, ohne die mechanischen Eigenschaften negativ zu beeinflussen.

Gemäß einem weiteren Aspekt der vorliegenden Erfindung weist das Polyurethan Ruß mit einem Anteil von 2,5 bis 3,5 Gewichtsprozent auf. Es zeigt sich auf besonders vorteilhafte Weise, dass hiermit eine ausreichend hohe elektrische Leitfähigkeit zur Ableitung elektrostatischer Ladungen erreicht werden kann, wobei gleichzeitig die Anforderungen an das Polyurethan für einen Riemen mit besonders hoher Leistungsübertragung erfüllt werden können.

Gemäß einem weiteren Aspekt der vorliegenden Erfindung weist die Antriebsseite des Riemens eine Profilierung, vorzugsweise in der Querrichtung ausgerichtete Zähne, auf. Hierdurch kann ein mechanischer Kontakt zu einer Riemenscheibe über die Antriebsseite des Riemens verbessert werden, um höhere Kräfte in der Längsrichtung des Riemens übertragen zu können. Dies kann insbesondere durch in der Querrichtung ausgerichtete Zähne, also bei der Ausbildung des erfindungsgemäßen Riemens als Zahnriemen, besonders wirkungsvoll erfolgen. Gemäß einem weiteren Aspekt der vorliegenden Erfindung sind die Zugträger elektrisch leitfähig ausgebildet. Hierdurch kann die Leitfähigkeit des Riemens besonders wirkungsvoll gesteigert werden.

Leitfähig ausgebildete Zugträger können gemäß einem weiteren Aspekt der vorliegenden Erfindung beispielsweise aus Stahl oder Kohlenstofffasern ausgebildet sein. Dies ist besonders vorteilhaft, da die Werkstoffe einerseits eine hohe elektrische Leitfähigkeit aufweisen und zudem äußerst hohen mechanischen Belastungen standhalten können. Aufgrund des hohen Elastizitätsmoduls können Zugträger aus Stahl oder Kohlenstofffasern dem Riemen eine besonders hohe Längssteifigkeit verleihen, wodurch ein Riemen besonders hohe Leistungen übertragen kann.

### Erläuterung Figuren

Anhand der folgenden Figuren wird nachfolgend ein Ausführungsbeispiel der Erfindung näher erläutert.
- Fig. 1: zeigt einen schematischen Längsschnitt durch einen Riemen.
- Fig. 2: zeigt eine Detaildarstellung der Fig. 1
- Fig. 3: zeigt einen bekannten zweischichtigen Aufbau eines bekannten Riemens.
- Fig. 4: zeigt die Draufsicht der perforierten Folienschicht in vertikaler Z-Richtung.

Die Beschreibung der o.g. Figuren erfolgt in kartesischen Koordinaten mit einer Längsrichtung X, einer zur Längsrichtung X senkrecht ausgerichteten nicht dargestellten Querrichtung sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden.

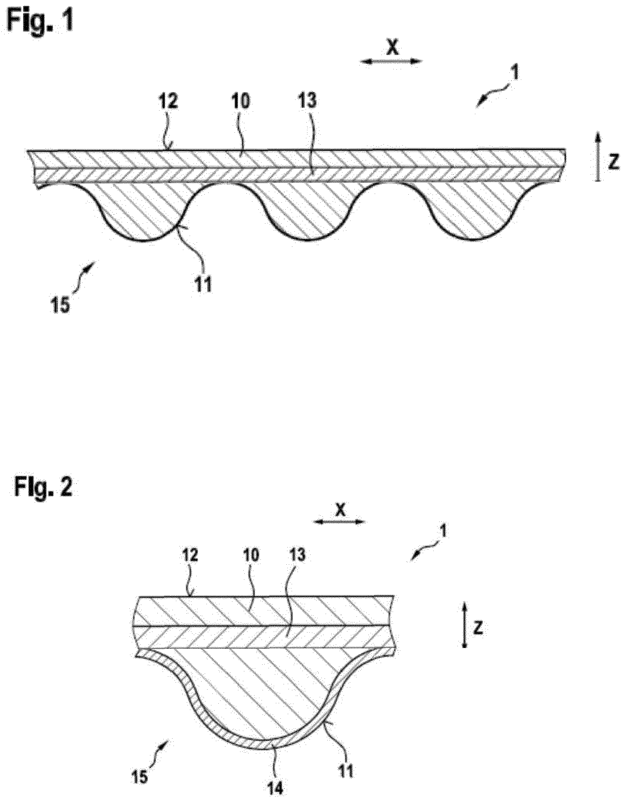

Fig. 1 zeigt einen schematischen Längsschnitt durch einen Riemen 1. Fig. 2 zeigt eine Detaildarstellung der Fig. 1.

Der Riemen 1 stellt einen allgemein bekannten Riemen 1 dar, welcher als Zahnriemen 1 ausgebildet ist. Der Zahnriemen 1 weist einen Riemenkörper 10 auf, welcher aus elektrisch leitfähigem Polyurethan (PU) besteht. Der Zahnriemen1 weist eine erste Riemenseite 11 auf, welche als Antriebsseite 11 ausgebildet ist, mit Antriebsrollen, Führungsrollen und Umlenkrollen (nicht dargestellt) eines Antriebssystems zusammenzuwirken und Kräfte zu übertragen. Hierzu weist die Antriebsseite 11 eine Profilierung 15 in Form von Zähnen 15 auf. Der Antriebsseite 11 in der Höhe Z gegenüberliegend weist der Zahnriemen 1 eine zweite Riemenseite 12 auf. Innerhalb des Riemenkörpers 10 sind mehrere Zugträger 13 in Form von Stahlseilen 13 in der Längsrichtung X verlaufend angeordnet, welches aus einzelnen Stahllitzen gebildet wird. Die Stahlseile 13 dienen der Übertragung der Zugkräfte in der Längsrichtung X als Bewegungsrichtung des Zahnriemens1.

Die äußere Oberfläche der Antriebsseite 11 des Zahnriemens1 wird von einer Beschichtung 14 gebildet, welche separat als Laminat hergestellt und mit dem Profil 15 vorgeformt wird. Die laminierte und vorgeformte Beschichtung 14 wird zusammen mit den Stahlseilen 13 mit flüssigem Polyurethan vergossen und ausgehärtet, so dass sich eine stoffschlüssige Verbindung zwischen der laminierten Beschichtung 14 und dem Riemenkörper 10 ergibt und zu einem einstückigen Zahnriemen1 führt, siehe z.B. Fig. 2.

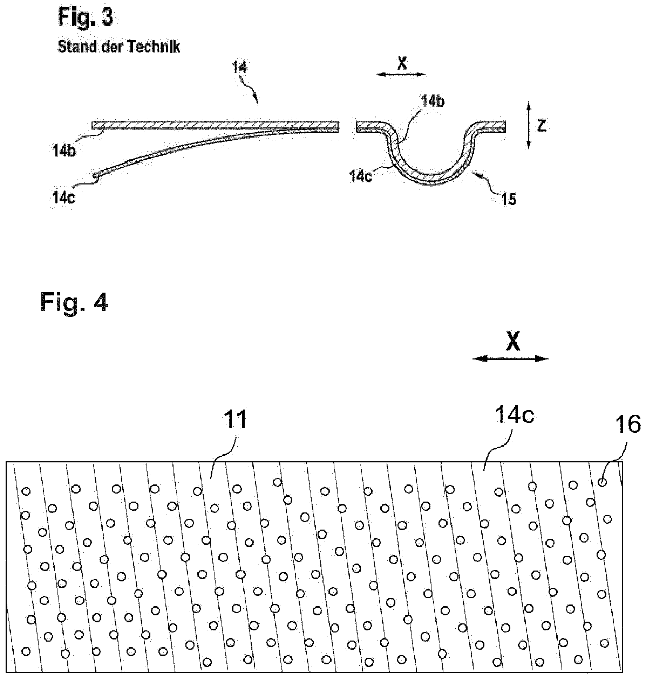

Fig. 3 zeigt einen bekannten zweischichtigen Aufbau eines bekannten Riemens 1 wie des zuvor beschriebenen Zahnriemens1. Es werden eine Gewebeschicht 14b und eine Folie 14c als Außenfolie 14c verwendet, welche separat hergestellt und durch Übereinanderlegen zu einem zweischichtigen Aufbau zusammengeführt werden. Der zweischichtige Aufbau wird dann in die gewünschte Form, welche der Anordnung der Profilierung 15 entspricht, gebracht. Sowohl die Gewebeschicht 14b als auch die Folie 14c sind elektrisch isolierend ausgebildet. Die Folie 14c bildet die Oberfläche der Antriebsseite 11 des Riemens 1. Derartige Beschichtungen 14 für Zahnriemen1 sind bekannt.

Fig. 4 zeigt die Draufsicht der perforierten Folienschicht in vertikaler Z-Richtung. Die Folie 14c weist in diesem Ausführungsbeispiel eine Perforation 16 auf. Als Perforation 16 sind in diesem Fall Durchgangsöffnungen oder Löcher in der Folie 14c zu verstehen. Die Perforation 16 kann nachträglich jeder handelsüblichen Folie 14c durch eine Prägewalze hinzugefügt werden, die auf der Oberfläche spitze Nägel zum Durchdringen der Folienschicht aufweist. Die Durchgangsöffnungen der Perforation 16 sind in diesem Ausführungsbeispiel zueinander beabstandet beliebig über die Oberfläche der Folie 14c verteilt. Während des Herstellungsprozesses durchdringt das fließfähige, niedrigviskose, elektrisch leitfähige Polyurethan des Riemenkörpers 10 die Perforation 16 der Folie 14c, sodass die eine elektrisch leitfähige Verbindung zwischen dem Riemenkörper 10 und der Antriebsseite 11 der Riemens 1 besteht. Eine elektrostatische Aufladung des Riemens 1 wird so über den Riemenkörper 10 durch die elektrisch isolierend ausgebildete Beschichtung 14 über mit der Antriebsseite 11 in Kontakt stehende und geerdete Riemenscheiben abgeleitet.

### Bezugszeichenliste

- X: Längsrichtung
- Y: Querrichtung; Breite
- Z: vertikale Richtung; Höhe

- 1: Riemen; Zahnriemen
- 10: Riemenkörper
- 11: erste Riemenseite; Antriebsseite
- 12: zweite Riemenseite
- 13: Zugträger
- 14: Beschichtung
- 14b: Gewebeschicht
- 14c: Folienschicht
- 15: Profilierung bzw. Zähne der ersten Riemenseite 11
- 16: Perforation / Durchgangsöffnung

## Patentansprüche

1. Riemen (1),
umfassend einem Riemenkörper (10),
wobei der Riemenkörper (10) ein elektrisch leitfähiges Polyurethan aufweist, vorzugsweise aus Polyurethan besteht,
wobei in dem Riemenkörper (10) in einer Längsrichtung (X) eine Mehrzahl von Zugträgern (13) angeordnet und von dem polymeren Material des Riemenkörpers (10) umschlossen ist,
wobei der Riemen (1) auf einer Antriebsseite (11) eine Beschichtung (14) aufweist, die einen festen Haftverbund mit dem Riemenkörper bildet, wobei die Beschichtung (14) eine Folienschicht (14c) und eine zwischen dem Riemenkörper (10) und der Folienschicht (14c) angeordnete, Lücken aufweisende Gewebeschicht (14b) aufweist,
**dadurch gekennzeichnet, dass**
die Folienschicht (14c) zumindest eine stellenweise Perforation (16) aufweist, wobei die Perforation (16) zumindest teilweise von dem Polyurethan gefüllt ist, wobei die Folienschicht (14c) elektrisch isolierend ausgebildet ist.

2. Riemen (1) nach Anspruch 1,
**dadurch gekennzeichnet, dass**
die Gewebeschicht (14b) elektrisch isolierend ausgebildet ist.

3. Riemen (1) nach einem der vorhergehenden Ansprüche,
**dadurch gekennzeichnet, dass**
die Folienschicht (14c) Polyethylen aufweist, vorzugsweise aus Polyethylen besteht.

4. Riemen (1) nach einem der vorhergehenden Ansprüche,
**dadurch gekennzeichnet, dass**
das Polyurethan Ruß mit einem Anteil von 1 bis 6 Gewichtsprozent aufweist.

5. Riemen (1) nach einem der vorhergehenden Ansprüche,
**dadurch gekennzeichnet, dass**
das Polyurethan Ruß mit einem Anteil von 2,5 bis 3,5 Gewichtsprozent aufweist.

6. Riemen (1) nach einem der vorhergehenden Ansprüche,
**dadurch gekennzeichnet, dass**
die Antriebsseite (11) des Riemens (1) eine Profilierung (15), vorzugsweise in der Querrichtung ausgerichtete Zähne, aufweist.

7. Riemen (1) nach einem der vorhergehenden Ansprüche,
**dadurch gekennzeichnet, dass**
die Zugträger (13) elektrisch leitfähig ausgebildet sind.

8. Riemen (1) nach einem der vorhergehenden Ansprüche,
**dadurch gekennzeichnet, dass**
die Zugträger (13) aus Stahl oder Kohlenstofffaser ausgebildet sind.

## Claims

1. Belt (1),
comprising a belt body (10),
wherein the belt body (10) comprises an electrically conductive polyurethane, preferably consists of polyurethane,
wherein in the belt body (10) in a longitudinal direction (X) a plurality of tensile strength members (13) is arranged and surrounded by the polymeric material of the belt body (10),
wherein on a drive side (11) the belt (1) comprises a coating (14) which forms a secure adhesive bond with the belt body,
wherein the coating (14) comprises a film layer (14c) and a fabric layer (14b) which is arranged between the belt body (10) and the film layer (14c) and comprises voids,
**characterized in that**
at least points of the film layer (14c) comprise a perforation (16), wherein the perforation (16) is at least partially filled by the polyurethane, wherein the film layer (14c) is electrically insulating.

2. Belt (1) according to Claim 1,
**characterized in that**
the fabric layer (14b) is electrically insulating.

3. Belt (1) according to either of the preceding claims,
**characterized in that**
the film layer (14c) comprises polyethylene, preferably consists of polyethylene.

4. Belt (1) according to any of the preceding claims,
**characterized in that**
the polyurethane comprises carbon black in a proportion of 1 to 6 percent by weight.

5. Belt (1) according to any of the preceding claims,
**characterized in that**
the polyurethane comprises carbon black in a proportion of 2.5 to 3.5 percent by weight.

6. Belt (1) according to any of the preceding claims,
**characterized in that**
the drive side (11) of the belt (1) has a profiling (15), preferably teeth oriented in the transverse direction.

7. Belt (1) according to any of the preceding claims,
**characterized in that**
the tensile strength members (13) are electrically conductive.

8. Belt (1) according to any of the preceding claims,
**characterized in that**
the tensile strength members (13) are made of steel or carbon fibre.

## Revendications

1. Courroie (1),
comprenant un corps (10) de courroie,
le corps (10) de courroie comportant un polyuréthane électroconducteur, de préférence consistant en polyuréthane.
dans le corps (10) de courroie une pluralité de tirants (13) étant disposés dans une direction longitudinale (X) et entourés par la matière polymère du corps (10) de courroie,
la courroie (1) comportant sur un côté d'entraînement (11) un revêtement (14) qui forme une liaison adhésive solide avec le corps de courroie,
le revêtement (14) comportant une couche de film (14c) et une couche de tissu (14b) comportant des vides, disposée entre le corps (10) de courroie et la couche de film (14),
**caractérisée en ce que**
la couche de film (14c) comporte au moins une perforation (16) par endroits, la perforation (16) étant remplie au moins en partie par le polyuréthane, la couche de film (14c) étant constituée isolante électrique.

2. Courroie (1) selon la revendication 1,
**caractérisée en ce que**
la couche de tissu (14b) est constituée isolante électrique.

3. Courroie (1) selon l'une quelconque des revendications précédentes,
**caractérisée en ce que**
la couche de film (14c) comporte du polyéthylène, de préférence consiste en polyéthylène.

4. Courroie (1) selon l'une quelconque des revendications précédentes,
**caractérisée en ce que**
le polyuréthane comporte du noir de carbone en une proportion de 1 à 6 pour cent en poids.

5. Courroie (1) selon l'une quelconque des revendications précédentes,
**caractérisée en ce que**
le polyuréthane comporte du noir de carbone en une proportion de 2,5 à 3,5 pour cent en poids.

6. Courroie (1) selon l'une quelconque des revendications précédentes,
**caractérisée en ce que**
le côté d'entraînement (11) de la courroie (1) comporte un profilage (15), de préférence des dents orientées dans la direction transversale.

7. Courroie (1) selon l'une quelconque des revendications précédentes,
**caractérisée en ce que**
les tirants (13) sont constitués électroconducteurs.

8. Courroie (1) selon l'une quelconque des revendications précédentes,
**caractérisée en ce que**
les tirants (13) sont constitués d'acier ou de fibres de carbone.
